# FASCICULE DE BREVET EUROPEEN

(11) **EP 1 662 636 B1**
(45) Date de publication et mention de la délivrance du brevet: **06.11.2013**
(21) Numéro de dépôt: 05292462.8
(22) Date de dépôt: 21.11.2005
(51) Int. Cl.: H02K 9/00, F01D 25/18, F01D 15/10, F02K 3/06, H02K 7/18, F02C 7/268

(54) **Turbomachine comportant un générateur de courant électrique intégré**
Turbomaschine mit einem integrierten Stromgenerator
Turbomachine with an integrated electrical generator

(30) Priorité: 25.11.2004 FR 0412504
(43) Date de publication de la demande: 31.05.2006
(73) Titulaire: SNECMA, 75015 Paris (FR)
(72) Inventeur: Bouiller, Philippe, 77210 Samoreau (FR); Morreale, Serge, 77390 Guignes (FR); Rousselin, Stéphane, 77850 Hericy (FR)
(74) Mandataire: Cardy, Sophie Marie

(56) Documents cités:
- EP-A- 1 382 802
- WO-A-02/37046
- GB-A- 1 141 001
- US-A- 5 237 817
- US-B1- 6 314 717

## Description

L'invention concerne une turbomachine, et plus particulièrement un turboréacteur, comportant un générateur de courant électrique intégré coaxial à l'axe de la turbomachine.

Dans un moteur conventionnel, le boîtier d'accessoires équipé de pompes à carburant, de pompes de lubrification des paliers, de pompes hydrauliques pour la commande de divers organes, de générateurs électriques et du démarreur, est placé à l'extérieur du moteur et reçoit la puissance extraite du moteur au moyen d'un arbre radial et de renvois d'angles.

Au fil du temps, l'augmentation des taux de compression et des températures d'entrée dans la turbine, ainsi que l'amélioration des matériaux et du rendement, ont constamment réduit la taille des moteurs pour obtenir un rapport poussée/poids toujours plus important, que ce soit pour les applications civiles ou les applications militaires.

Proportionnellement, la chaîne de prélèvement de puissance et le boîtier d'accessoires n'ont suivi qu'avec difficulté cette évolution et représentent encore une part importante du volume et de la masse des moteurs, notamment lorsque ces derniers sont de faible poussée, donc de petite taille, surtout quand ce boîtier d'accessoires, généralement placé sur le carter du moteur, supporte un démarreur à air et un générateur électrique séparés.

L'utilisation de petits moteurs, toujours plus simples et de coût réduit, pour propulser des avions d'entraînement, des drones d'observation ou d'attaque et des missiles de croisière, oblige en plus les motoristes à privilégier la furtivité de ces moteurs. Ceci peut être envisagé par une forte réduction de leur surface frontale, ce qui procure en outre un gain de traînée significatif permettant d'augmenter l'autonomie ou la portée des aéronefs ou engins téléguidés équipés de ces moteurs. Il paraît donc souhaitable, de façon à réduire la masse et la surface frontale des moteurs, d'envisager l'intégration d'un générateur-démarreur électrique dans le moteur et de supprimer l'emploi des liaisons mécaniques pour que l'interface entre le moteur et les accessoires deviennent alors une transmission électrique.

Sur les avions gros porteurs, à commandes de vol électriques ou électrohydrauliques toujours plus nombreuses, ainsi que sur les avions radar, d'alerte avancée et de surveillance électronique, les besoins en énergie électrique sont importants. Les moteurs de ces avions sont équipés de générateurs d'appoint ou auxiliaires, ce qui augmente la taille des boîtiers, ainsi que leur masse pour les supporter. Il est donc intéressant d'intégrer un générateur auxiliaire, en plus du générateur-démarreur dans le moteur, dans un moteur à haut taux de dilution, afin de réduire la taille et la masse des renvois d'angles, voire de les supprimer, et d'amincir la nacelle, en logeant certains accessoires à entraînement électrique dans le pylône.

Selon l'état de la technique, l'intégration d'un générateur à l'intérieur du moteur entraîne l'utilisation d'un circuit d'huile de refroidissement propre au générateur pour le refroidissement de ses bobinages, voire de ses aimants.

Cette situation multiplie donc les équipements (pompes et canalisations d'huile) à l'intérieur du moteur, ce qui complique en outre l'accessibilité au générateur lors des opérations de maintenance.

La présente invention a pour objectif de fournir un agencement de turbomachine permettant de surmonter les inconvénients de l'art antérieur et en particulier offrant la possibilité d'optimiser le parcours de l'huile entre la lubrification des paliers et le refroidissement du générateur.

A cet effet, l'invention concerne une turbomachine selon la revendication 1, comportant un corps haute pression, un compresseur axial d'axe X monté sur un rotor et comprenant un carter, et au moins un palier arrière disposé entre le carter et le rotor dudit compresseur, ladite turbomachine comportant en outre un générateur de courant électrique coaxial audit corps et dont l'inducteur (ou rotor) est solidaire en rotation dudit rotor du compresseur et dont l'induit (ou stator) est solidaire dudit carter.

Selon la présente invention, la turbomachine est caractérisée en ce que ledit générateur de courant électrique est disposé en amont dudit palier arrière dans la direction du flux d'air et en ce que ledit générateur de courant électrique comporte au moins un premier circuit de refroidissement entourant ledit induit qui débouche dans un gicleur de lubrification dudit palier arrière.

De cette manière, on comprend que par le placement du premier circuit de refroidissement du générateur de courant électrique dans le circuit de lubrification de la turbomachine, on réalise l'intégration du générateur électrique sans réellement compliquer davantage les équipements d'huile.

De préférence, la turbomachine comporte en outre une chambre de combustion et le ledit corps présente, en amont de ladite chambre de combustion, ledit compresseur d'axe X destiné à délivrer de l'air à ladite chambre et, en aval de ladite chambre, une turbine recevant des gaz chauds de ladite chambre de combustion et destinée à entraîner en rotation le rotor dudit compresseur, ledit compresseur comportant une pluralité d'étages de compression, chaque étage présentant une couronne d'aubes fixes solidaires dudit carter et une couronne d'aubes mobiles qui s'étendent radialement à la périphérie d'un disque dudit rotor.

Selon une autre disposition avantageuse de la présente invention, il est également possible d'intégrer conformément à la présente invention un générateur électrique dans le cas d'une turbomachine d'un deuxième type qui comporte en outre un corps basse pression ayant un compresseur basse pression disposé en amont du corps haute pression, et une turbine basse pression disposée en aval du corps haute pression et destinée à entraîner en rotation le rotor dudit compresseur basse pression, ledit compresseur comportant une pluralité d'étages de compression présentant chacun une couronne d'aubes fixes et une couronne d'aubes mobiles qui s'étendent radialement à la périphérie d'un disque dudit rotor. Dans ce cas, ladite turbomachine du deuxième type comporte en outre un carter intermédiaire disposé entre le compresseur basse pression et le compresseur haute pression, l'induit du générateur électrique est solidaire dudit carter intermédiaire et ledit palier arrière est monté sur ledit carter intermédiaire.

Dans le cadre de la présente invention, soit ledit générateur de courant électrique est configuré pour fonctionner en tant que démarreur, soit ledit générateur de courant électrique est configuré pour fonctionner en tant que générateur auxiliaire, soit la turbomachine comporte deux générateurs de courant électrique, l'un formant un démarreur et l'autre formant un générateur auxiliaire.

S'il s'agit d'une turbomachine du deuxième type, selon une autre disposition préférentielle, la turbomachine comporte en outre au moins un palier avant disposé entre ledit carter intermédiaire et le rotor dudit compresseur basse pression, en amont dudit générateur électrique et ledit premier circuit de refroidissement est en communication avec le circuit d'huile de lubrification dudit palier avant.

Dans le cas du paragraphe précédent, la turbomachine du deuxième type comporte, de préférence, en outre un deuxième circuit de refroidissement entourant ledit inducteur et alimenté par des moyens d'alimentation reliés au premier circuit de refroidissement, ledit deuxième circuit de refroidissement débouchant à proximité dudit palier avant. Ici, avantageusement, lesdits moyens d'alimentation du deuxième circuit de refroidissement comportent un gicleur de lubrification qui forme, avec ledit gicleur de lubrification du palier arrière, un gicleur double tête.

Selon une autre disposition avantageuse, ledit induit est monté sur un support cylindrique, ledit inducteur est monté sur un support cylindrique, et des moyens d'étanchéité annulaires sont disposés entre les extrémités desdits supports cylindriques, ce par quoi ledit générateur électrique est rendu étanche à l'atmosphère d'huile de lubrification qui l'entoure.

Avantageusement, ledit premier circuit de refroidissement comporte une première série de canaux hélicoïdaux.

Egalement, de façon préférentielle, ledit deuxième circuit de refroidissement comporte une deuxième série de canaux hélicoïdaux.

Les dispositions de l'invention permettent d'envisager une turbomachine d'aviation dans laquelle les accessoires sont entraînés par des moteurs électriques alimentés par les générateurs de courant intégrés au moteur, et donc de supprimer les liaisons mécaniques et les renvois d'angles, d'alléger le moteur et d'amincir la nacelle dans le cas d'un turboréacteur à haut taux de dilution.

Il est très intéressant également de minimiser la masse du carter d'accessoires sur les gros moteurs car cela permet de réduire les charges radiales en cas de fort balourd lors de la perte d'aubes de soufflante et d'obtenir un carter intermédiaire allégé.

D'autres avantages et caractéristiques de l'invention ressortiront à la lecture de la description suivante faite à titre d'exemple et en référence aux dessins annexés dans lesquels :
- la figure 1 est une demi-coupe schématique d'un turboréacteur double corps double flux qui montre la disposition d'un générateur intégré selon l'invention ;
- la figure 2 est une vue partielle agrandie du détail II de la figure 1 et montre la disposition du générateur selon l'invention sur l'arbre du rotor haute pression.

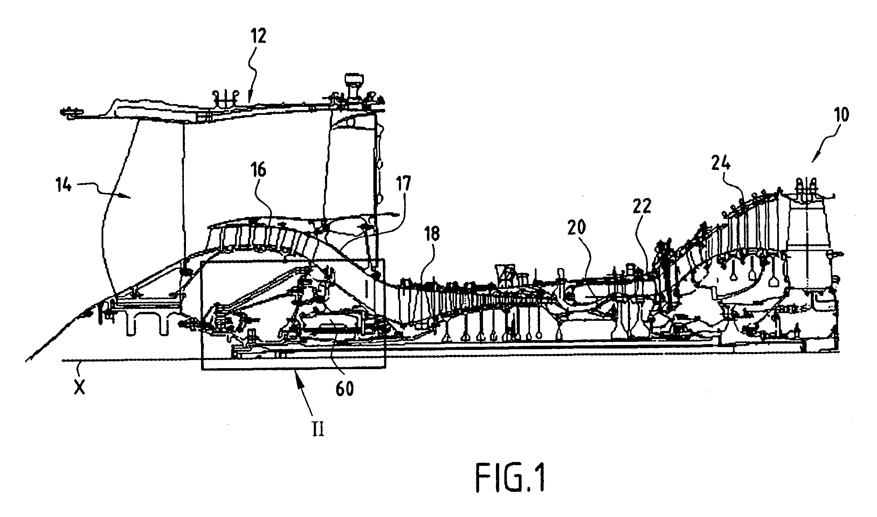

La figure 1 montre un turboréacteur double corps double flux 10, sur lequel on agence, conformément à la présente invention, un générateur de courant à l'avant.

Plus précisément, le turboréacteur 10 d'axe X, comporte classiquement une nacelle périphérique 12 (représentée partiellement) dans laquelle sont situés, de gauche à droite sur la figure 1 (soit d'amont en aval -si l'on considère le flux d'air- ou d'avant en arrière), successivement la soufflante 14, un compresseur basse pression 16, un compresseur haute pression 18, une chambre de combustion 20, une turbine haute pression 22 et une turbine basse pression 24.

Enfin, selon la présente invention, le turboréacteur 10 est équipé d'un générateur de courant électrique 60 situé à l'avant du turboréacteur 10 (à gauche sur la figure 1), dans une zone froide.

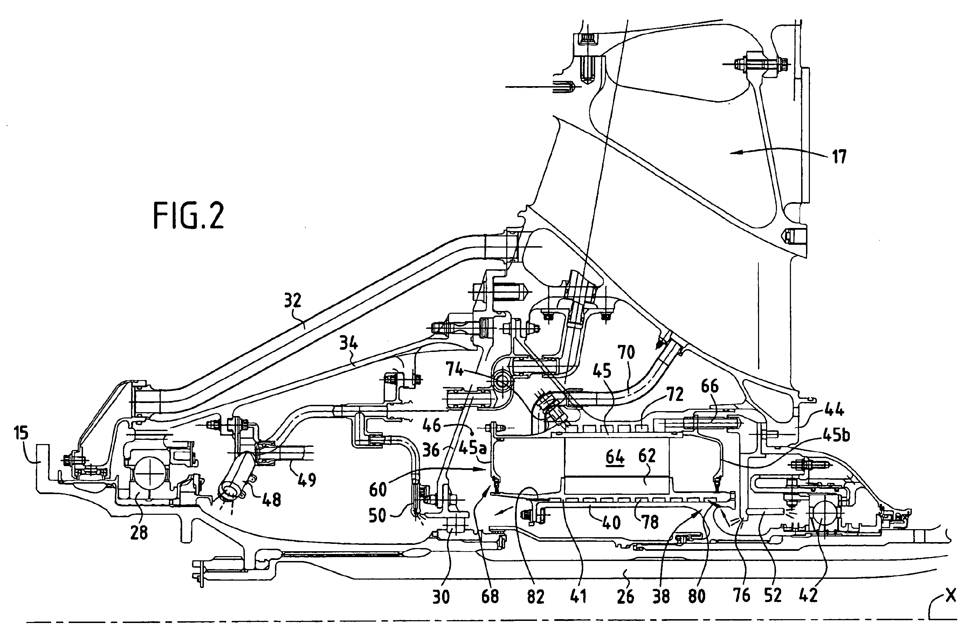

Plus précisément, si l'on se réfère à la figure 2, on voit que le générateur de courant électrique 60 est disposé entre le compresseur basse pression 16 et le compresseur haute pression 18, au niveau du carter intermédiaire 17 séparant le compresseur basse pression 16 du compresseur haute pression 18.

Ce carter intermédiaire 17 est prolongé vers l'avant par le carter extérieur du compresseur basse pression 16 et vers l'arrière par le carter extérieur du compresseur haute pression 18 (voir figure 1).

Le rotor 15 du compresseur basse pression 16 est relié à la turbine basse pression 24 située en aval de la turbine haute pression 22 par un arbre basse pression 26 d'axe X. Le rotor 15 et cet arbre basse pression 26 sont respectivement reliés au carter intermédiaire 17 par un palier avant 28 et un palier intermédiaire 30.

Plus précisément, le palier avant 28 est monté sur le rotor 15 et sur des éléments structuraux de support essentiellement formés d'une virole avant 34, elle-même fixée sur le carter intermédiaire 17. Des tubes 32 assurent l'étanchéité du joint situé en amont du palier 28.

Le palier intermédiaire 30 est disposé entre l'arbre basse pression 26 et une virole intermédiaire 36 montée de façon solidaire à la virole avant 34 et au carter intermédiaire 17.

Un palier arrière 42 est monté entre l'arbre haute pression 38 et une structure de support 44 fixée sur l'arrière du carter intermédiaire 17.

L'arbre haute pression 38 du compresseur haute pression 18 qui s'étend en aval (à droite sur la figure 2) du carter intermédiaire 17, est prolongé vers l'avant du turboréacteur par une virole cylindrique 40 qui est située dans le plan axial du carter intermédiaire 17. Cette virole cylindrique 40 va servir au montage du générateur 60 entre le palier avant 28 et le palier arrière 42.

On comprend que l'agencement défini précédemment délimite une enceinte 46 formée d'un espace annulaire situé entre le carter intermédiaire 17, sa structure de support 44, la virole intermédiaire 36 et l'arbre haute pression 38.

De façon classique, ces différents paliers 28, 30 et 42 sont lubrifiés au moyen d'un ou plusieurs gicleurs (respectivement les gicleurs 48, 50 52) qui peuvent être reliés au même circuit d'huile par un réseau de canalisations.

Selon la présente invention, l'enceinte 46 située entre le palier intermédiaire 30 et le palier arrière 42 est équipée d'un générateur électrique 60 formé d'un rotor 62 (l'inducteur) et d'un stator 64 (l'induit).

Le rotor 62 est essentiellement constitué d'aimants et il est mobile en rotation autour de l'axe X, de façon solidaire avec l'arbre haute pression 38 : à cet effet, le rotor 62 est monté sur un support cylindrique 41 solidaire de la virole cylindrique 40.

Le stator 64, composé essentiellement d'une série de bobinages, est coaxial au rotor 62 en étant monté, via une connexion amovible 66, à la structure de support 44. Plus précisément, le stator 64 est directement monté sur un support cylindrique 45, lui-même solidaire de la structure de support 44. Ce support cylindrique 45 est coaxial au support cylindrique 41 du rotor 62, et il comporte une extrémité avant 45a et une extrémité arrière 45b.

On comprend que le générateur électrique 60 se trouve dans l'enceinte 46 qui récupère au moins une partie de l'huile issue du gicleur 52 envoyant un jet d'huile en direction du palier arrière 42.

Ainsi, on comprend que dans l'enceinte 46, règne une atmosphère avec un brouillard d'huile de lubrification, de sorte que le générateur électrique 60 doit être maintenu étanche à ce brouillard d'huile.

À cet effet, on réalise :
- une étanchéité du boîtier contenant le générateur électrique 60, ce boîtier étant formé par les supports cylindriques 41 et 45. Plus précisément, cette étanchéité entre le stator 64 et le rotor 62 est effectuée au moyen de deux joints à brosse 68, réalisés de préférence en carbone : ces joints 68 sont montés sur les extrémités avant et arrière du stator 64 (exactement sur le bord libre des extrémités avant 45a et arrière 45b du support cylindrique 45) et viennent en appui contre les extrémités avant et arrière du support cylindrique 41 du rotor 62 (ce montage pouvant être inversé); et
- une pressurisation de l'espace intérieur du boîtier contenant le générateur électrique 60 (délimité par le support cylindrique 41 et le support cylindrique 45), au moyen d'un conduit d'alimentation auxiliaire en air 70 débouchant au niveau de la paroi du support cylindrique 45.

Dans cet environnement, il est également nécessaire de refroidir les bobinages du stator 64. Ce refroidissement est assuré au moyen d'une première série de canaux hélicoïdaux 72 qui s'étendent d'avant en arrière à l'intérieur du support cylindrique 45, en étant alimentés par une arrivée d'huile 74. Cette première série de canaux hélicoïdaux 72 est mise en communication de fluide avec le gicleur 52 permettant la lubrification du palier arrière 42.

Plus précisément, les canaux hélicoïdaux 72 débouchent à l'arrière (à droite sur la figure 2) dans un gicleur double tête comportant le gicleur 52 ainsi qu'un gicleur 76 orienté en direction opposée à celle du gicleur 52, c'est-à-dire vers l'arbre haute pression 38, afin de permettre le refroidissement du rotor 62.

Il est prévu que l'arrivée d'huile 74 de la première série de canaux hélicoïdaux 72 puisse être alimentée en huile par un circuit d'huile commun avec l'arrivée d'huile 49 alimentant les gicleurs 48 et 50 du palier avant 28 et du palier intermédiaire 30.

À cet égard, il faut remarquer que l'huile ayant traversé la première série de canaux hélicoïdaux 72 voit sa température rester suffisamment peu élevée pour permettre le refroidissement du palier arrière 42 via le gicleur 52.

De façon secondaire, on cherche également à refroidir les aimants du rotor 62, au moyen d'une circulation d'huile de refroidissement au travers d'une deuxième série de canaux hélicoïdaux 78 disposés entre la virole cylindrique 40 et le support cylindrique 41.

À cet effet, le gicleur 76 de refroidissement du rotor 62 est situé en regard d'une ouverture 80 traversant la virole cylindrique 40 jusqu'à la deuxième série de canaux hélicoïdaux 78, depuis l'arrière (à droite sur la figure 2).

De cette façon, tout ou partie de l'huile provenant du gicleur 76 pénètre par l'ouverture 80 (voir la flèche) dans l'extrémité arrière de la deuxième série de canaux hélicoïdaux 78 (à droite sur la figure 2).

L'extrémité avant de la deuxième série de canaux hélicoïdaux 78 débouche à l'emplacement d'une ouverture 82 permettant d'expulser l'huile dans l'enceinte 46, à proximité du palier intermédiaire 30 (voir la flèche).

On comprend donc de ce qui précède, qu'il est possible dans le cadre de l'agencement selon la présente invention, dans lequel un générateur électrique 60 est présent, d'assurer l'étanchéité de ce dernier alors qu'il est placé dans l'enceinte 46 dans laquelle règne un brouillard d'huile, tout en continuant à assurer la lubrification des différents paliers et en utilisant le circuit de lubrification pour assurer en outre le refroidissement des différentes parties du générateur électrique.

De cette façon, on réalise le refroidissement des bobinages du générateur électrique, éventuellement de ses aimants, par le même circuit d'huile que celui réalisant la lubrification des paliers ce qui permet de ne pas rendre plus complexe le cheminement des canalisations d'huile dans l'enceinte en multipliant les alimentations, les canalisations et les récupérations ou les drains.

Le générateur électrique 60 peut constituer aussi bien un générateur démarreur qu'un générateur auxiliaire.

Il est à noter que l'adjonction du générateur électrique 60 en tant que générateur-démarreur ou en tant que générateur auxiliaire dans le moteur, ne nécessite pas l'adjonction de paliers supplémentaires pour supporter les inducteurs et les induits.

Le mode de réalisation qui vient d'être décrit en regard des figures 1 et 2 n'est pas limitatif de l'application de la présente invention.

En effet, dans le cas d'une turbomachine comprenant seulement un corps haute pression, le générateur électrique est monté dans le carter du compresseur axial unique, en amont du palier disposé entre le carter et le rotor du compresseur haute pression, de sorte que la première série de canaux hélicoïdaux 72 se prolonge par un circuit d'huile de lubrification débouchant dans le gicleur venant lubrifier ce palier.

## Revendications

1. Turbomachine comportant un corps haute pression, un compresseur axial (18) haute pression d'axe X, ledit compresseur haute pression comprenant un rotor (38) et un carter et au moins un palier arrière (42) disposé entre le carter et le rotor (38) dudit compresseur haute pression (18), ladite turbomachine comportant en outre un générateur de courant électrique (60) coaxial audit corps haute pression et dont l'inducteur (62) est solidaire en rotation dudit rotor (38) du compresseur haute pression (18) et dont l'induit (64) est solidaire dudit carter,
**caractérisé en ce que** ledit générateur de courant électrique (60) est disposé en amont dudit palier arrière (42) dans la direction du flux d'air et **en ce que** ledit générateur de courant électrique (60) comporte au moins un premier circuit de refroidissement (72) entourant ledit induit (64) qui débouche dans un gicleur de lubrification (52) dudit palier arrière (42).

2. Turbomachine selon la revendication 1, **caractérisée en ce qu'**elle comporte en outre une chambre de combustion (20) et **en ce que** le ledit corps haute pression présente, en amont de ladite chambre de combustion (20), ledit compresseur haute pression (18) d'axe X destiné à délivrer de l'air à ladite chambre de combustion et, en aval de ladite chambre de combustion, une turbine (22) recevant des gaz chauds de ladite chambre de combustion (20) et destinée à entraîner en rotation le rotor (38) dudit compresseur haute pression (18), ledit compresseur haute pression comportant une pluralité d'étages de compression, chaque étage présentant une couronne d'aubes fixes solidaires dudit carter et une couronne d'aubes mobiles qui s'étendent radialement à la périphérie d'un disque dudit rotor.

3. Turbomachine selon la revendication 1 ou 2, **caractérisée en ce qu'**elle comporte en outre un corps basse pression ayant un compresseur basse pression (16) disposé en amont du corps haute pression, et une turbine basse pression (24) disposée en aval du corps haute pression et destinée à entraîner en rotation le rotor (15) dudit compresseur basse pression, ledit compresseur haute pression comportant une pluralité d'étages de compression présentant chacun une couronne d'aubes fixes et une couronne d'aubes mobiles qui s'étendent radialement à la périphérie d'un disque dudit rotor dudit compresseur haute pression, ladite turbomachine comportant en outre un carter intermédiaire (17) disposé entre le compresseur basse pression (16) et le compresseur haute pression (18), **en ce que** l'induit (64) du générateur électrique est solidaire dudit carter intermédiaire (17) et **en ce que** ledit palier arrière (42) est monté sur ledit carter intermédiaire (17).

4. Turbomachine selon la revendication 1, 2 ou 3, **caractérisée par le fait que** ledit générateur de courant électrique (60) est configuré pour fonctionner en tant que démarreur.

5. Turbomachine selon l'une quelconque des revendications précédentes, **caractérisée par le fait que** ledit générateur de courant électrique (60) est configuré pour fonctionner en tant que générateur auxiliaire de courant.

6. Turbomachine selon la revendication 3, **caractérisée par le fait qu'**elle comporte en outre au moins un palier avant (28 ; 30) disposé entre ledit carter intermédiaire (17) et le rotor (15) dudit compresseur basse pression, en amont dudit générateur électrique (60), et **par le fait que** ledit premier circuit de refroidissement (72) est en communication avec le circuit d'huile de lubrification dudit palier avant (28 ; 30).

7. Turbomachine selon la revendication 6, **caractérisée par le fait qu'**elle comporte en outre un deuxième circuit de refroidissement (78) entourée par ledit inducteur (62) et alimenté par des moyens d'alimentation (76) reliés au premier circuit de refroidissement (72), ledit deuxième circuit de refroidissement (78) débouchant à proximité dudit palier avant (28 ; 30).

8. Turbomachine selon la revendication 7, **caractérisée par le fait que** lesdits moyens d'alimentation (76) du deuxième circuit de refroidissement (78) comportent un gicleur de lubrification qui forme, avec ledit gicleur de lubrification (52) du palier arrière (42), un gicleur double tête.

9. Turbomachine selon l'une quelconque des revendications précédentes, **caractérisée par le fait que** ledit induit (64) est monté sur un support cylindrique (45), en ce que ledit inducteur (62) est monté sur un support cylindrique (41), et en ce que des moyens d'étanchéité annulaires (68) sont disposés entre les extrémités desdits supports cylindriques (41,45), ce par quoi ledit générateur électrique (60) est rendu étanche à une atmosphère d'huile de lubrification qui entoure ledit générateur électrique (60).

10. Turbomachine selon l'une quelconque des revendications précédentes, **caractérisée par le fait que** ledit premier circuit de refroidissement (72) comporte une première série de canaux hélicoïdaux.

11. Turbomachine selon la revendication 7, **caractérisée par le fait que** ledit deuxième circuit de refroidissement (78) comporte une deuxième série de canaux hélicoïdaux.

## Patentansprüche

1. Turbomaschine, umfassend ein Hochruckgehäuse, einen axialen Hochdruckverdichter (18) mit der Achse X, wobei der Hochdruckverdichter einen Rotor (38) und ein Gehäuse sowie wenigstens ein hinteres Lager (42), das zwischen dem Gehäuse und dem Rotor (38) des Hochdruckverdichters (18) angeordnet ist, umfasst, wobei die Turbomaschine ferner einen zu dem Hochdruckgehäuse koaxialen Stromgenerator (60) umfasst, dessen Stator (62) mit dem Rotor (38) des Hochdruckverdichters (18) drehfest verbunden ist und dessen Läufer (64) mit dem Gehäuse fest verbunden ist,
**dadurch gekennzeichnet, dass** der Stromgenerator (60) dem hinteren Lager (42) in der Richtung des Luftstroms vorgeordnet ist und dass der Stromgenerator (60) wenigstens einen den Läufer (64) umgebenden ersten Kühlkreis (72) umfasst, der in eine Düse zum Schmieren (52) des hinteren Lagers (42) mündet.

2. Turbomaschine nach Anspruch 1, **dadurch gekennzeichnet, dass** sie ferner eine Brennkammer (20) umfasst und dass das Hochdruckgehäuse stromaufwärts der Brennkammer (20) den Hochdruckverdichter (18) mit der Achse X, welcher dazu bestimmt ist, der Brennkammer Luft zu liefern, sowie stromabwärts der Brennkammer eine Turbine (22) aufweist, welche heiße Gase aus der Brennkammer (20) aufnimmt und dazu bestimmt ist, den Rotor (38) des Hochdruckverdichters (18) drehanzutreiben, wobei der Hochdruckverdichter eine Vielzahl von Verdichtungsstufen umfasst, wobei jede Stufe einen Kranz von Leitschaufeln, die mit dem Gehäuse fest verbunden sind, und einen Kranz von Laufschaufeln, die sich radial am Umfang einer Scheibe des Rotors erstrecken, aufweist.

3. Turbomaschine nach Anspruch 1 oder 2, **dadurch gekennzeichnet, dass** sie ferner ein Niederdruckgehäuse mit einem Niederdruckverdichter (16), der dem Hochdruckgehäuse vorgeordnet ist, sowie eine Niederdruckturbine (24), die dem Hochdruckgehäuse nachgeordnet und dazu bestimmt ist, den Rotor (15) des Niederdruckverdichters drehanzutreiben, umfasst, wobei der Hochdruckverdichter eine Vielzahl von Verdichtungsstufen umfasst, die jeweils einen Kranz von Leitschaufeln und einen Kranz von Laufschaufeln, die sich radial am Umfang einer Scheibe des Rotors des Hochdruckverdichters erstrecken, aufweisen, wobei die Turbomaschine ferner ein Zwischengehäuse (17), das zwischen dem Niederdruckverdichter (16) und dem Hochdruckverdichter (18) angeordnet ist, umfasst, dass der Läufer (64) des elektrischen Generators mit dem Zwischengehäuse (17) fest verbunden ist und dass das hintere Lager (42) an dem Zwischengehäuse (17) angebracht ist.

4. Turbomaschine nach Anspruch 1, 2 oder 3, **dadurch gekennzeichnet, dass** der Stromgenerator (60) dazu ausgelegt ist, als Starter zu arbeiten.

5. Turbomaschine nach einem der vorhergehenden Ansprüche, **dadurch gekennzeichnet, dass** der Stromgenerator (60) dazu ausgelegt ist, als Hilfsstromgenerator zu arbeiten.

6. Turbomaschine nach Anspruch 3, **dadurch gekennzeichnet, dass** sie ferner wenigstens ein vorderes Lager (28; 30) umfasst, das zwischen dem Zwischengehäuse (17) und dem Rotor (15) des Niederdruckverdichters, vor dem elektrischen Generator (60) angeordnet ist, und dadurch dass der erste Kühlkreis (72) mit dem Schmierölkreis des vorderen Lagers (28; 30) in Verbindung steht.

7. Turbomaschine nach Anspruch 6, **dadurch gekennzeichnet, dass** sie ferner einen zweiten Kühlkreis (78) umfasst, der von dem Stator (62) umgeben ist und durch Versorgungsmittel (76), welche mit dem ersten Kühlkreis (76) verbunden sind, versorgt wird, wobei der zweite Kühlkreis (78) in der Nähe des vorderen Lagers (28; 30) ausmündet.

8. Turbomaschine nach Anspruch 7, **dadurch gekennzeichnet, dass** die Versorgungsmittel (76) des zweiten Kühlkreises (78) eine Schmierdüse umfassen, die mit der Schmierdüse (52) des hinteren Lagers (42) eine Doppelkopfdüse bildet.

9. Turbomaschine nach einem der vorhergehenden Ansprüche, **dadurch gekennzeichnet, dass** der Läufer (64) an einem zylindrischen Träger (45) angebracht ist, dass der Stator (62) an einem zylindrischen Träger (41) angebracht ist und dass ringförmige Dichtungsmittel (68) zwischen den Enden der zylindrischen Träger (41, 45) angeordnet sind, wodurch der elektrische Generator (60) gegenüber einer Schmierölatmosphäre, die den elektrischen Generator (60) umgibt, abgedichtet ist.

10. Turbomaschine nach einem der vorhergehenden Ansprüche, **dadurch gekennzeichnet, dass** der erste Kühlkreis (72) eine erste Reihe von Spiralkanälen umfasst

11. Turbomaschine nach Anspruch 7, **dadurch gekennzeichnet, dass** der zweite Kühlkreis (78) eine zweite Reihe von Spiralkanälen umfasst.

## Claims

1. A turbomachine comprising a high-pressure spool, a high-pressure compressor (18) of axis X, said high-pressure compressor comprising a rotor (38) and a casing and at least one rear bearing (42) disposed between the casing and the rotor (38) of said high-pressure compressor (18), said turbomachine further comprising an electricity generator (60) coaxial with said high-pressure spool and including a primary magnetic circuit (62) that is constrained to rotate with said rotor (38) of the high-pressure compressor (18) and a secondary magnetic circuit (64) that is secured to said casing,
the turbomachine being **characterized in that** said electricity generator (60) is disposed upstream from said rear bearing (42) in the air flow direction and **in that** said electricity generator (60) includes at least a first cooling circuit (72) surrounding said secondary magnetic circuit (64) and opens into a nozzle (52) for lubricating said rear bearing (42).

2. A turbomachine according to claim 1, **characterized in that** it further comprises a combustion chamber (20) and **in that**, upstream from said combustion chamber (20), said high-pressure spool presents said high-pressure compressor (18) of axis X for delivering air to said combustion chamber, and downstream from said combustion chamber, said high-pressure spool presents a turbine (22) receiving hot gas from said combustion chamber (20) for driving the rotor (38) of said high-pressure compressor (18) in rotation, said high-pressure compressor comprising a plurality of compression stages, each stage presenting a ring of stationary blades secured to said casing and a ring of moving blades extending radially from the periphery of a disk of said rotor.

3. A turbomachine according to claim 1 or claim 2, **characterized in that** it further comprises a low-pressure spool having a low-pressure compressor (16) disposed upstream from the high-pressure spool, and a low-pressure turbine (24) disposed downstream from the high-pressure spool and serving to drive the rotor (15) of said low-pressure compressor in rotation, said high-pressure compressor comprising a plurality of compression stages each presenting a ring of stationary blades and a ring of moving blades extending radially from the periphery of a respective disk of said rotor, said turbomachine further comprising an intermediate casing (17) disposed between the low-pressure compressor (16) and the high-pressure compressor (18), **in that** the secondary magnetic circuit (64) of the electricity generator is secured to said intermediate casing (17), and **in that** said rear bearing (42) is mounted on said intermediate casing (17).

4. A turbomachine according to claim 1, 2, or 3, **characterized by** the fact that said electricity generator (60) is configured to operate as a starter.

5. A turbomachine according to any preceding claim, **characterized by** the fact that said electricity generator (60) is configured to operate as an auxiliary electricity generator.

6. A turbomachine according to claim 3, **characterized by** the fact that it further comprises at least one front bearing (28; 30) disposed between said intermediate casing (17) and the rotor (15) of said low-pressure compressor, upstream from said electricity generator (60), and by the fact that said first cooing circuit (72) is in communication with the lubricating oil circuit of said front bearing (28; 30).

7. A turbomachine according to claim 6, **characterized by** the fact that it further comprises a second cooling circuit (78) surrounded by said primary magnetic circuit (62) and fed by the feed means (76) connected to the first cooling circuit (72), said second cooing circuit (78) opening out in the vicinity of said front bearing (28; 30).

8. A turbomachine according to claim 7, **characterized by** the fact that said feed means (76) of the second cooling circuit (78) comprise a lubrication nozzle that, together with said nozzle (52) for lubricating the rear bearing (42), constitutes a two-headed nozzle.

9. A turbomachine according to any preceding claim, **characterized by** the fact that said secondary magnetic circuit (64) is mounted on a cylindrical support (45), in that said primary magnetic circuit (62) is mounted on a cylindrical support (41), and in that annular sealing means (68) are disposed between the ends of said cylindrical supports (40, 45), thereby making said electricity generator (60) proof against a lubricating oil atmosphere that surrounds said electricity generator (60).

10. A turbomachine according to any preceding claim, **characterized by** the fact that said first cooling circuit (72) comprises a first series of helical channels.

11. A turbomachine according to claim 7, **characterized by** the fact that said second cooling circuit (78) comprises a second series of helical channels.
